# EUROPEAN PATENT SPECIFICATION

(11) **EP 4 033 398 B1**
(45) Date of publication and mention of the grant of the patent: **11.02.2026**
(21) Application number: 21153331.0
(22) Date of filing: 25.01.2021
(51) Int. Cl.: G06F 18/23, G06T 7/254, G06V 20/52

(54) **A CLUSTERING METHOD APPLIED TO A CHANGE EVENT STREAM PRODUCED BY AN EVENT-BASED VISION SENSOR**
CLUSTER-VERFAHREN, ANGEWENDET AUF EINEN ÄNDERUNGSEREIGNISSTROM, DER VON EINEM EREIGNISBASIERTEN SICHTSENSOR ERZEUGT WIRD
PROCÉDÉ DE GROUPAGE APPLIQUÉ À UN FLUX D'ÉVÉNEMENTS DE CHANGEMENT PRODUIT PAR UN CAPTEUR DE VISION BASÉ SUR DES ÉVÉNEMENTS

(43) Date of publication of application: 27.07.2022
(73) Proprietor: TOYOTA JIDOSHA KABUSHIKI KAISHA, Toyota-shi, Aichi-ken, 471-8571 (JP); IniVation AG, 8050 Zürich (CH)
(72) Inventor: MEIER, Sven, 1140 BRUSSELS (BE); OLMEDA REINO, Daniel, 1140 BRUSSELS (BE); WALGER, Lennart, 53125 BONN (DE); TAVERNI, Gemma, 8050 ZURICH (CH)
(74) Representative: Cabinet Beau de Loménie

(56) References cited:
- WO-A1-2020/157157

## Description

### Field of the disclosure

The present disclosure is related to the field of event-based vision sensors and more precisely to a method for clustering and tracking.

### Description of the Related Art

An event-based vision sensor is a type of sensor which produces a nearly continuous stream of temporal brightness changes. Each event, or change event, corresponds to an increase or a decrease of brightness by at least a given value. These sensors may comprise a plurality of pixels arranged in a matrix configured to that in the stream, each event is associated with a time stamp, a pixel address (the position in the matrix), and a sign (typically embodied by a value indicating whether the brightness increases or decreases, -1 or +1 for example).

Interest in these sensors has grown as they benefit from a low latency, a high dynamic range, and a low power consumption for transferring, computing, and storing data. Also, the operation of these sensors automatically subtracts backgrounds from observed scenes.

There is a need for an efficient clustering method to be used on the streams outputted by event-based vision sensors. Clustering refers to grouping elements that share a similarity. More precisely, in the present document, clustering refers to grouping pixels that have been activated by a change of brightness on a same object. More precisely, in the present document, clustering refers to grouping of pixels that shared a common behavior. In case of event-based sensor the clusters are activated by a change of brightness due to object movements. Clustering allows to univocally identify multiple objects. Clustering is usually combined with tracking, once the object is recognized its movements (speed, acceleration) can be monitored.

Clustering-tracking algorithms are crucial for many computer vision applications such as object detection, object tracking, robotics and segmentation.

In the prior art, various approaches have been proposed to process streams of events, including approaches which monitor the activity around a pixel (i.e. in the neighborhood of the pixel) which has been activated.

Typically, known algorithms based on a neighborhood look-up from a map are used for specific applications that do not aim to cluster and track objects.

Document "Low-latency line tracking using event-based dynamic vision sensors" (Lukas Everding and Jörg Conradt, Frontiers in neurorobotics, 12:4, 2018) proposes a method to detect lines.

Document "Fast Event-based Corner Detection (FAST)" (Elias Mueggler, Chiara Bartolozzi, and Davide Scaramuzza. In British Machine Vision Conference (BMVC), 2017.) discloses a similar search around an active pixel, focuses on corners detection.

The above two documents, while offering solutions to process streams of events, do not provide solutions for performing clustering.

Other known methods explore the use of a rectangular tracker, for example disclosed in document "Embedded Vision System for Real-Time Object Tracking using an Asynchronous Transient Vision Sensor" (M. Litzenberger, C. Posch, D. Bauer, A. N. Belbachir, P. Schon, B. Kohn, and H. Garn. In 2006 IEEE 12th Digital Signal Processing Workshop 4th IEEE Signal Processing Education Workshop, pages 173-178, 2006.). Document "Low Latency Event-Based Filtering and Feature Extraction for Dynamic Vision Sensors in Real-Time FPGA Applications" (A. Linares-Barranco, F. Perez-Peña, D. P. Moeys, F. Gomez-Rodriguez, G. Jimenez-Moreno, S. Liu, and T. Delbruck. IEEE Access, 7:134926-134942, 2019.) uses the same algorithm. In the rectangular tracker algorithm, cluster are assumed to be circular, and the name "rectangular" comes from the box built around it. Each new event is assigned to a cluster based on a distance criterion (close enough to the cluster), and the event information is used to update this cluster's weight and center position. If no cluster is found, a new one is created with the center in the event position and initialized with weight, size, creation time, and velocity. The main advantage of the rectangular tracker method is that it does not require any data buffering and consequently memory consumption. The only stored data is the clusters' information; after an event is used to update the cluster, it is erased.

Also, document "Real-time clustering and multi-target tracking using event-based sensors" (Francisco Barranco, Cornelia Fermuller, and Eduardo Ros. Real-time clustering and multitarget tracking using event-based sensors. In 2018 IEEE/RSJ International Conference on Intelligent Robots and Systems (IROS), pages 5764-5769. IEEE, 2018.). The algorithm addresses the problem of multi-objects clustering and tracking.

Document WO 2020/157157 discloses a method for processing information from an event-based sensor wherein clusters are formed.

There is a need for more efficient clustering methods, and in particular clustering methods that can handle different scenarios, for different objects independently of their size, shape, and with a limited computational complexity.

### Summary of the disclosure

The present disclosure overcomes one or more deficiencies of the prior art by proposing a clustering method applied to a change event stream produced by an event-based vision sensor which comprises a plurality of pixels and is configured to output a stream of change events, wherein a cluster corresponds to an object observed by the event-based vision sensor, and wherein each change event corresponds to a change in brightness detected by one pixel and comprises a time stamp, a pixel address, and a parameter describing a sign of said brightness change, comprising:
providing a matrix having the same dimensions as the event-based vision sensor in which at each position, an indicator is stored to indicate if the corresponding pixel of the event-based sensor was not used or assigned to a given cluster or can be used to form a cluster, in this case the pixel is called a candidate, and
when a change event is detected in the change event stream at a pixel (i.e. when the pixel is activated):
determining a group of pixels centered on the pixel (i.e. the neighborhood of the activated pixel, centered on this activated pixel),
reading the indicators of the pixels in the group of pixels wherein the number of pixels assigned to clusters is determined and the number of pixels which are candidates to form a cluster is also determined,
verifying if a predetermined rule is verified using the indicators read in the reading step,
if the predetermined rule based on at least the indicators (i.e. based on what they indicate) of the pixels of the group of pixels is verified, modifying the indicator of the pixel (i.e. setting it to "assigned to a given cluster" or "candidate to form a cluster", in other words clustering this pixel) , as a function of the number of pixels assigned to clusters and the number of pixels which are candidates to form a cluster, to indicate that the pixel is assigned to an existing cluster or to a new cluster.

This clustering method can be used in a method for tracking objects observed by the sensor.

Thus, the present invention leverages information from the neighborhood of pixels which have been activated (a change event is detected), and this information is stored in a novel structure, the matrix in which clustering information is stored for each pixel. This matrix is continuously updated (whenever a pixel event is detected), and it has been observed that storing three possible state per pixel (not used/assigned to a given cluster/candidate to form a cluster) is a robust manner to form clusters from the stream of events.

The clustering can be based on simple rules, depending on the application, which require a processing applied only in the neighborhood of the active pixel for each incoming event: this processing is consequently limited and the computational complexity is limited.

The matrix may also be called a map, or a contexture map, as it stores at every instant all the information required to perform clustering in this continuously updated map. This matrix/map illustrates the context of each pixel, to be consulted when a pixel is activated.

The above method allows forming clusters which truly follow the shape of an object moving, as the movement of the object will activate pixels show a same object one after the other. Contrary to some methods of the prior art discussed above, there is no limitation to rectangular or circular tracking.

Also, the predetermined rule should be chosen so that the pixel will be assigned to a cluster if, given the indicators of the pixels of the group of pixels, it is likely that the pixel corresponds to a part of an object which has moved. Typically, the predetermined rule can be based on a number of pixels in the group of pixels being assigned to a cluster.

The size of the group of pixels can be chosen so as to limit the computational burden. By using a small group of pixels, for example centered on the pixel, it is possible to limit the computational burden. This can be acceptable as local information has been observed to be sufficient to assign a cluster to a pixel.

When a pixel has been activated but is not likely to belong to a cluster (there are no pixels assigned to a cluster around this pixel), it is possible that this pixel belongs to a cluster as it has been activated: this can lead to modifying the indicator to indicate that the indicator is "candidate to form a cluster".

According to a particular embodiment, the group of pixels (i.e. the neighborhood) is defined as the pixels belonging to a sub-matrix centered on the pixel.

This sub-matrix can be square, or example. Other shapes are possible.

According to a particular embodiment, the sub-matrix is a 5x5 matrix or a 3x3 matrix.

It has been observed by the inventors that these two dimensions can provide a good selection of pixels to cluster pixel together. It should be noted that in these sub-matrixes, the center pixel is the one that has been activated and that the group of pixels comprises 24 or 8 pixels.

According to a particular embodiment, the method comprises a step of determining the size of the sub-matrix (i.e. the size can change between two subsequent detections of change-events).

This step can be implemented, for example, after a determination of the size of objects to be tracked/clustered. For example, a size of object above a threshold can lead to using a 5x5 sub-matrix, and a size of 3x3 can be used for other applications so as to limit the computational complexity.

According to a particular embodiment, the predetermined rule is verified if a number of pixels above a given threshold in the group of pixels have an indicator indicating that they are assigned to a same cluster, and the indicator of the pixel is changed to indicate that the pixel is assigned to this cluster.

It should be noted that if there is an insufficient number of pixels having an indicator indicating that they are assigned to a same cluster the pixel, the pixel can have an indicator indicating that it is a candidate to form a cluster.

According to a particular embodiment, another predetermined rule is verified if a number of pixels above a given threshold in the group of pixels have an indicator indicating that they are candidates to form a cluster, and the indicator of the pixel is changed to indicate that the pixel is assigned to a new cluster.

In this embodiment, the neighboring pixels have also been activated previously and are candidates to form a cluster, and a new cluster can therefore be created as it is likely that the activation of the present pixel relates to an object moving for which a cluster can be formed.

According to a particular embodiment, the predetermined rule or the other predetermined rule is not verified, and the matrix comprises at each position at least one additional indicator, and wherein the indicator of the pixel is only modified to indicate that the pixel is assigned to a cluster if a predetermined additional rule based on the additional indicators of pixels of the group of pixels is verified.

In this embodiment, the predetermined rule or the other predetermined rule are not verified, but this is not sufficient to prevent assigning the pixel to a cluster, an additional rule may also be verified, and this rule is based on an additional indicator.

This embodiment uses the fact that an additional property may be shared by pixels in the group of pixels without them being assigned to a same cluster, which could indicate the presence of a cluster. The additional predetermined rule can be referred to as consistency rules.

According to a particular embodiment, the at least one additional indicator comprises a movement indicator indicating a speed and a direction in which the cluster assigned to this pixel is moving.

For example, the indicator can be the optical flow or any other suitable attribute.

The additional rule/consistency rule should be chosen so that an object moving at a given speed in a given direction and potentially corresponding to a cluster should also include the present pixel if its activation is coherent with the speed and the direction.

According to a particular embodiment, the at least one additional predetermined rule is verified if a number of pixels above a given threshold (which may differ from the threshold mentioned for the predetermined rule or the other predetermined rule)in the group of pixels (in the neighborhood) have a movement indicator indicating a direction oriented towards the pixel, and wherein the movement indicator of the pixel is changed in accordance with the movement indicator of the pixels assigned to this cluster. In this particular embodiment, a cluster is likely to activate the pixel because the movement indicators indicate that an object is moving towards the pixel.

According to a particular embodiment, the movement indicator of the pixel is known (for example, it has been computed), and wherein the at least one additional predetermined rule is verified if a number of pixels above a given threshold (which may differ from the thresholds mentioned before) in the group of pixels have a movement indicator which is within a given distance from the movement indicator of the pixel.

The movement indicator can be obtained from any known method, for example by using the method to determine the optical flow disclosed in document "Adaptive time-slice block-matching optical flow algorithm for dynamic vision sensors (ABMOF)" (Min Liu and Tobi Delbruck, 2018) and in document WO 2018219931.

This particular embodiment can be implemented when the movement indicator is known/computed, and reflects the fact that if the movement for this pixel is consistent with other pixels, then it is likely that this corresponds to a moving cluster.

According to a particular embodiment, the at least one additional indicator comprises a color indicator.

This embodiment can be implemented with an event-based vision sensor which also obtains color information along with the change of brightness. By way of example, document "Design of an RGBW color VGA rolling and global shutter dynamic and active-pixel vision sensor" (C. Li et al., 2015 IEEE International Symposium on Circuits and Systems (ISCAS), Lisbon, 2015, pp. 718-721) discloses a sensor which also obtains color information.

According to a particular embodiment, the color indicator of the pixel is known (from the change event, for example) and wherein the at least one additional predetermined rule is verified if a number of pixels above a given threshold (which may differ from the thresholds mentioned before) in the group of pixels have a color indicator within a distance from the color of the color indicator of the pixel.

If other pixels around this pixel have been activated with the same color, it is likely that this corresponds to a cluster. The person skilled in the art will know which method can be used to determine that two colors are sufficiently close.

According to a particular embodiment, the color indicator of the pixel is not known and wherein the color indicator of the pixel is changed with a color obtained from the color indicators of the pixels assigned to this cluster.

This particular embodiment proposes to leverage color information from the other pixels if their color is known.

According to a particular embodiment, the method comprises elaborating a list of clusters on the basis of the matrix and the pixels that are assigned to clusters.

This list of clusters can be used to implement a tracking.

According to a particular embodiment, the method comprises merging clusters or splitting a cluster, or removing a cluster on the basis of at least one additional indicator of the pixels of these clusters.

In this embodiment, indicators are changed when clusters are edited (merge, split, removal).

The invention also proposes a system for clustering pixels, the system including an event-based vision sensor which comprises a plurality of pixels and is configured to output a stream of change events, wherein a cluster corresponds to an object observed by the event-based vision sensor, and wherein each change event corresponds to a change in brightness detected by one pixel and comprises a time stamp, a pixel address, and a parameter describing a sign of said brightness change,
the system comprising a processor configured to:
provide a matrix having the same dimensions as the event-based vision sensor in which at each position, an indicator is stored to indicate if the corresponding pixel of the event-based sensor was not used or assigned to a given cluster or can be used to form a cluster, in this case the pixel is called a candidate, and
when a change event is detected in the change event stream at a pixel:
   determine a group of pixels centered on the pixel,
   read the indicators of the pixels in the group of pixels wherein the number of pixels assigned to clusters is determined and the number of pixels which are candidates to form a cluster is also determined,
   verify if a predetermined rule is verified using the indicators read in the reading step,
   if the predetermined rule based on at least the indicators of the pixels of the group of pixels is verified, modify the indicator of the pixel, as a function of the number of pixels assigned to clusters and the number of pixels which are candidates to form a cluster, to indicate that the pixel is assigned to an existing cluster or to a new cluster.

This system can be configured to perform any one of the above defined embodiments of the clustering method.

The invention also proposes a vehicle including this system.

By way of example, this system can be a computer system.

The invention also provides a vehicle including this system.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The invention is defined by the appended claims.

### Brief description of the drawings

How the present disclosure may be put into effect will now be described by way of example with reference to the appended drawings, in which:
- figure 1 is a schematic representation of the steps of a clustering method according to an example,
- figures 2A, 2B, 2C, and 2D are examples of implementations of different rules, and
- figure 3 is a vehicle according to an example.

### Description of the embodiments

An exemplary clustering method will now be described. This clustering method can be used in a tracking method as the clusters that are found change over time and monitoring the changes affecting the clusters amounts to tracking objects observed.

The objects to be tracked through clustering are observed using an event-based vision sensor which comprises a plurality of pixels arranged in a matrix.

The sensor is configured to output a stream of change events, wherein each change event corresponds to a change in brightness detected by one pixel and comprises a time stamp, a pixel address, and a parameter describing a sign of said brightness change.

The method is applied to an event-based stream, represented on the figure. The other object which will be manipulated in a matrix (or contexture matrix or contexture map) which will be used to look-up information and which will be updated continuously.

In a preliminary step, performed once, a matrix is provided in step S00. This matrix has the same dimensions as the event-based vision sensor (and more precisely the same dimensions as the matrix of pixels of the matrix forming the sensor). Consequently, for each pixel of the vision sensor, there is a pixel in this matrix having the same coordinates (x and y, for example). This matrix is configured to store at least one indicator to indicate if the corresponding pixel of the event-based sensor was not used or assigned to a given cluster or a candidate to form a cluster.

Optionally, the matrix can also store the timestamp of the last activation of the pixel and the polarity of the last event.

This matrix will be continuously updated (not explicitly shown on the figure), for example when a pixel is assigned to a cluster as will be described hereinafter, this information will be stored in the matrix.

The steps of the clustering method will then be implemented when a change event is detected (step S01), and using the matrix provided in step S00 (eventually after the matrix has been updated if the steps S01 and the subsequent steps have already been performed for a previous change-event). The person skilled in the art may also refer to this as the activation of a pixel. From the stream of change events, it is possible to know the location of the pixel activated, for example in the form of two coordinates x and y.

Then, the indicators associated with the pixel which has been activated will be read in step S02. This step will allow determining if the pixel is already assigned to a cluster (if the event is the first event in the stream, the pixel has not been assigned and all the indicators will read "never been used; if however this event is not the first event, the matrix may have been updated before). If it is the case and the pixel is already assigned, the pixel remains assigned to this cluster (S03). If the pixel has never been used (never been activated) or is a candidate to form a cluster, step S04 can be carried out in which a group of pixels centered on the pixel can be determined.

In step S04, it is possible to determine which pixels belong to a sub-matrix centered on the pixel activated in step S01. This step can comprise a step in which the size of the sub-matrix will be determined. For example, the sub-matrix can be a 5x5 or a 3x3 sub-matrix. The size 3x3 can be used so as to limit the computational complexity and the size 5x5 can be used for applications in which large objects are tracked.

In step S05, the indicators of the pixels in the group of pixels are read. In this step, the number of pixels assigned to clusters is determined (for each cluster present in the group of pixels), the number of pixels which are candidates to form a cluster is also determined. Subsequently, step S06 can be carried out in which it is verified if a predetermined rule is verified using the indicators read in step S05. More precisely, this step is a first verification step wherein the only indicators that are used are the ones which indicate if the pixels in the neighborhood are assigned to a given cluster/never used before/candidates to form a cluster. By way of example, it is verified if there is a number of pixels assigned to a same cluster in the group of pixels, or if there is a number of pixels which are candidates to form a pixel in the group of pixels. This number can be set according to the application and the size of the group of pixels.

If there is are sufficient number of pixels assigned to a same cluster/candidates to form a cluster, the pixel is assigned to a cluster (step S07). In this step, the pixel is assigned to the cluster of the other pixels, or to a new cluster if the other pixels were candidates.

If there are not enough pixels which are assigned to a given cluster/candidates, step S08 is carried out in which additional indicators of the pixels of the group of pixels are read in the contexture matrix. Should it be possible to compute new values for these additional indicators, these new values will be calculated in this step and stored in the matrix. These additional indicators can relate to the color of the change events and/or to the movement (speed and direction). Typically, the movement can be computed using known techniques to calculate the optical flow. Should the computation of additional indicators be possible for the activated pixel, this computation can be carried out in step S08.

A verification (step S09) of an additional rule will then be carried out using the additional indicators of the pixels of the group of pixels.

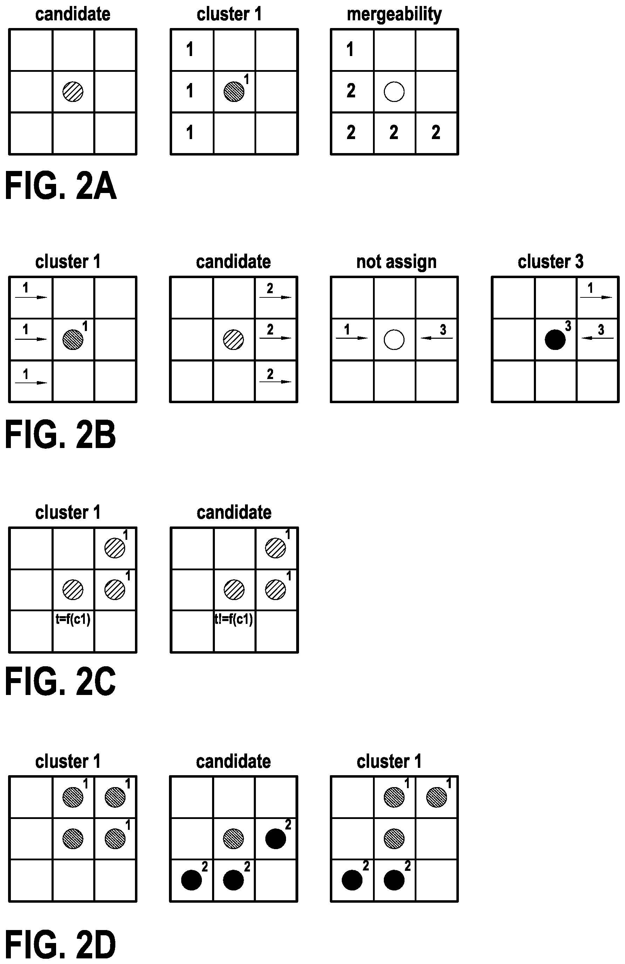

Figure 2, described hereinafter, will provide examples of situations in which additional indicators are used.

If the additional rule is verified, the indicator of the pixel is modified to indicate that the pixel is assigned to a cluster in step S10 (either a new cluster, or to an existing cluster, as will be described hereinafter in relation to figure 2).

If the additional rule is not verified, step S11 is carried out in which the indicator of the pixel (detected in step S01) is modified to indicate that the pixel is a candidate to form a cluster, or to indicate that the pixel should be unassigned (i.e. "not used").

For example, the indicator can be "not used" if it is considered that the change event was the result of noise. This could be the case if a contradiction condition is verified on the basis of the additional indicators. This contradiction condition can be verified if there are a given numbers of additional indicators which are in contradiction with one another within the group of pixels. For example, if there are two pixels in the group of pixels having optical flows oriented towards the pixel but which are both oriented in opposite direction, there is a contradiction and the activation of the pixel could be related to noise.

It should be noted that a list of clusters may also be used to list the clusters present. This list can be elaborated on the basis of the matrix elaborated in step S00 and modified after each detection of an event.

This list can be edited, for example, it is possible to merge cluster (for example in accordance with the additional indicators), it is possible to split clusters, (also for example in accordance with the additional indicators), and it is possible to remove clusters.

By way of example, clusters can be removed if they are too small (size below a threshold) as this can be the result of noise, if their lifetime is above a lifetime threshold, or if they are unstable.

Merging cluster can be carried out if two cluster are coherent (for example they move in a same direction at a same speed, and/or the objects observed have the same color).

Splitting can be implemented when what was assumed to be a cluster separates and, for example, has two portions (or sub-clusters) moving in opposite directions. Different clustering algorithms can be used to detect that there are two sub-clusters and that a cluster should be split. For example, it is possible to use the K-means or the Mean-Shift algorithms.

Additionally, it should be noted that should additional indicators (movement/color) of pixels which belong to a same cluster be unavailable, it is possible to overwrite the additional indicators of these pixels with the additional indicators of other pixels of the cluster.

Figure 2A shows three sub-matrixes in an example where there is no additional predetermined rule. In the first example, denoted "candidate", the pixel in the center has encountered a change event. The other pixels in the sub-matrix have never been used, the indicator will be modified to "candidate to form a cluster".

In the second example denoted "cluster 1", the pixels with a "1" indicate that the pixels are assigned to a cluster. There are three pixels assigned to this cluster, this is considered to be a predetermined rule verified to modify the indicator of the pixel to indicate that the pixel is assigned to this cluster.

In the third example denoted "mergeability", there are pixels from two different clusters denoted "1" and "2", and the indicator will be modified to indicate that the pixel is assigned to cluster "2" as the number of pixels in the sub-matrix assigned to this cluster is above a threshold (for example 3).

Figure 2B shows four sub-matrixes in an example where movement is known. In these sub-matrixes, the movement is the optical flow and is illustrated by an arrow. In a first example "cluster 1", the optical flow of the center pixel is not known, and the optical flow of 3 pixels assigned to a cluster is oriented towards the center: the indicator is modified to indicate that the pixel is assigned to the cluster.

In a second example "candidate", the optical flow of the center pixel is not known, and the optical flow of 3 pixels assigned to a cluster is oriented in a direction which is opposite the center: the indicator is modified to indicate that the pixel is merely a candidate to form a cluster.

In a third example "not assign", there are two pixels assigned to clusters and they are both oriented towards the center: the pixel cannot be assigned to a cluster as there is a contradiction condition which is verified. The detected change-event can be the result of noise.

In a fourth example "cluster 3", there are pixels assigned to two clusters "1" and "3" but only the pixel assigned to cluster "3" is oriented towards the center: the pixel will be assigned to cluster "3".

It should be noted that the person skilled in the art will be able to determine if the optical flow is sufficiently oriented towards the center of the sub-matrix or not.

Figure 2C illustrates a more general case wherein the movement is known but expressed using the speed/velocity of a cluster. The timestamp of the activation of the pixel at the center should be coherent with the speed of the cluster present in the sub-matrix. For example for a cluster/object having a velocity v and being at instant t0 at a given location which is at a distance x from the pixel which has been activated, the activation is coherent with this movement if the timestamp of the activation is equal to t0+v/x. If this is the case, the pixel should be assigned to the cluster (first example), it not, it should be a candidate (second example). It should be noted that this embodiment can be implemented for objects having a constant velocity.

Figure 2D illustrates examples in which color is obtained for each change event. In the first example "cluster 1", the center pixel has the same color as the other pixels also assigned to cluster "1": the indicator is modified to indicate that the pixel is assigned to the cluster.

In the second example, "candidate" the center pixel has a color which differs from the color of the other pixels also assigned to cluster "1": the indicator is modified to indicate that the pixel is a candidate to form a cluster.

In the third example "cluster 1", the center pixel has the same color as two other pixels also assigned to cluster "1", and a color which differs from two pixels assigned to cluster "2": the indicator is modified to indicate that the pixel is assigned to cluster "1".

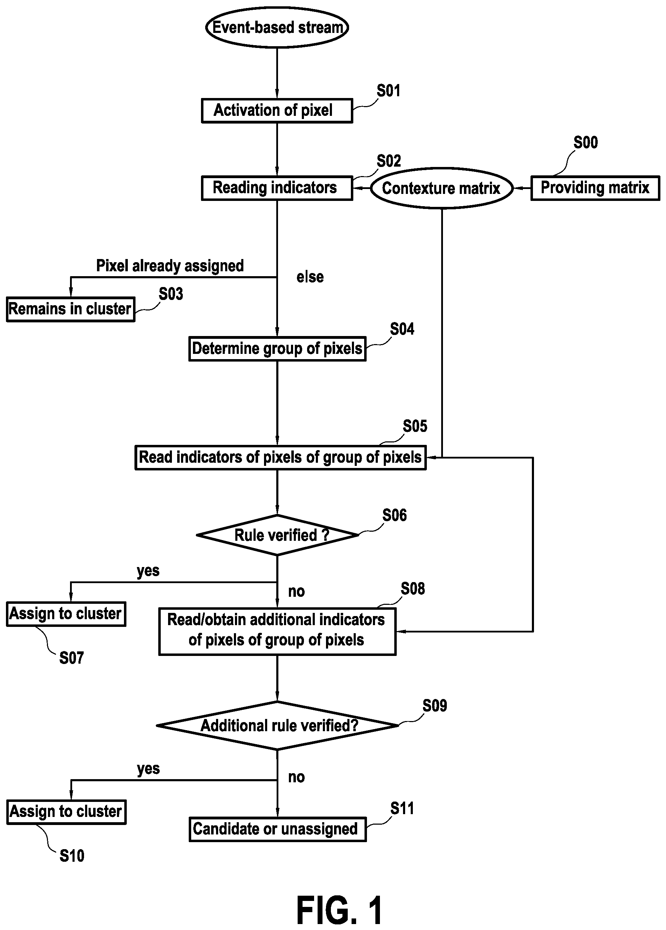

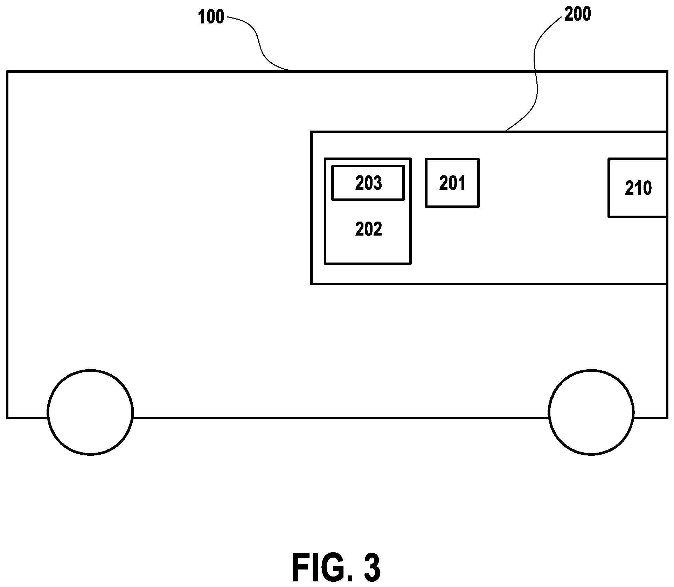

Figure 3 is a schematic representation of a vehicle 100 according to an example. This vehicle is equipped with a system 200 configured to perform the clustering method described in reference to figures 1 and 2A-2D. To this end, the system is equipped with an event-based sensor 210 and a processor 201 able to execute computer program instructions stored in a non-volatile memory 202.

In the illustrated example, computer program instructions 203 are stored in the nonvolatile memory 202 so that the processor can execute these instructions to be configured to:
- provide a matrix having the same dimensions as the event-based vision sensor in which at each position, an indicator is stored to indicate if the corresponding pixel of the event-based sensor was not used or assigned to a given cluster or a candidate to form a cluster, and
   when a change event is detected in the change event stream at a pixel:
- determine a group of pixels centered on the pixel,
- modify the indicator of the pixel if a predetermined rule based on at least the indicators of the pixels of the group of pixels is verified.

The above described method and system provide a clustering technique which is based on local consistency: based on the indicators and additional indicators of pixels. These indicators are stored in a matrix or map which illustrates the clustering state of each pixel, and provides additional information to help with the clustering of a pixel for which an event has been detected.

## Claims

1. A clustering method applied to a change event stream produced by an event-based vision sensor which comprises a plurality of pixels and is configured to output a stream of change events, wherein a cluster corresponds to an object observed by the event-based vision sensor, and wherein each change event corresponds to a change in brightness detected by one pixel and comprises a time stamp, a pixel address, and a parameter describing a sign of said brightness change, comprising:
providing (S00) a matrix having the same dimensions as the event-based vision sensor in which at each position, an indicator is stored to indicate if the corresponding pixel of the event-based sensor was not used or assigned to a given cluster or can be used to form a cluster, in this case the pixel is called a candidate, and
when a change event is detected (S01) in the change event stream at a pixel:
determining (S04) a group of pixels centered on the pixel,
reading (S05) the indicators of the pixels in the group of pixels wherein the number of pixels assigned to clusters is determined and the number of pixels which are candidates to form a cluster is also determined,
verifying (S06) if a predetermined rule is verified using the indicators read in the reading step,
if the predetermined rule based on at least the indicators of the pixels of the group of pixels is verified, modifying (S07) the indicator of the pixel, as a function of the number of pixels assigned to clusters and the number of pixels which are candidates to form a cluster, to indicate that the pixel is assigned to an existing cluster or to a new cluster.

2. The method of claim 1, wherein the group of pixels is defined as the pixels belonging to a sub-matrix centered on the pixel.

3. The method of claim 2, wherein the sub-matrix is a 5x5 matrix or a 3x3 matrix.

4. The method of claim 2 or 3, comprising a step of determining the size of the sub-matrix.

5. The method of any one of claims 1 to 4, wherein the predetermined rule is verified if a number of pixels above a given threshold in the group of pixels have an indicator indicating that they are assigned to a same cluster, and the indicator of the pixel is changed to indicate that the pixel is assigned to this cluster.

6. The method of claim 5, wherein another predetermined rule is verified if a number of pixels above a given threshold in the group of pixels have an indicator indicating that they are candidates to form a cluster, and the indicator of the pixel is changed to indicate that the pixel is assigned to a new cluster.

7. The method of claim 5 or 6, wherein the predetermined rule or the other predetermined rule is not verified, and the matrix comprises at each position at least one additional indicator, and wherein the indicator of the pixel is only modified to indicate that the pixel is assigned to a cluster if a predetermined additional rule based on the additional indicators of pixels of the group of pixels is verified.

8. The method of claim 5, wherein the at least one additional indicator comprises a movement indicator indicating a speed and a direction in which the cluster assigned to this pixel is moving.

9. The method of claim 8, wherein the at least one additional predetermined rule is verified if a number of pixels above a given threshold in the group of pixels have a movement indicator indicating a direction oriented towards the pixel, and wherein the movement indicator of the pixel is changed in accordance with the movement indicator of the pixels assigned to this cluster.

10. The method of claim 8, wherein the movement indicator of the pixel is known, and wherein the at least one additional predetermined rule is verified if a number of pixels above a given threshold in the group of pixels have a movement indicator which is within a given distance from the movement indicator of the pixel.

11. The method of any one of claim 7 to 10, wherein the at least one additional indicator comprises a color indicator.

12. The method of claim 11, the color indicator of the pixel is known and wherein the at least one additional predetermined rule is verified if a number of pixels above a given threshold in the group of pixels have a color indicator within a distance from the color of the color indicator of the pixel.

13. The method according to claim 11 or 12, wherein the color indicator of the pixel is not known and wherein the color indicator of the pixel is changed with a color obtained from the color indicators of the pixels assigned to this cluster.

14. The method of any one of claims 1 to 13, comprising elaborating a list of clusters on the basis of the matrix and the pixels that are assigned to clusters.

15. The method according to claim 14 when combined with any one of claims 7 to 13, comprising merging clusters or splitting a cluster, or removing a cluster on the basis of at least one additional indicator of the pixels of these clusters.

16. A system for clustering pixels, the system including an event-based vision sensor which comprises a plurality of pixels and is configured to output a stream of change events, wherein a cluster corresponds to an object observed by the event-based vision sensor, and wherein each change event corresponds to a change in brightness detected by one pixel and comprises a time stamp, a pixel address, and a parameter describing a sign of said brightness change,
the system comprising a processor (201) configured to:
provide a matrix having the same dimensions as the event-based vision sensor in which at each position, an indicator is stored to indicate if the corresponding pixel of the event-based sensor was not used or assigned to a given cluster or can be used to form a cluster, in this case the pixel is called a candidate, and
when a change event is detected in the change event stream at a pixel:
determine a group of pixels centered on the pixel,
read the indicators of the pixels in the group of pixels wherein the number of pixels assigned to clusters is determined and the number of pixels which are candidates to form a cluster is also determined,
verify if a predetermined rule is verified using the indicators read in the reading step,
if the predetermined rule based on at least the indicators of the pixels of the group of pixels is verified, modify the indicator of the pixel, as a function of the number of pixels assigned to clusters and the number of pixels which are candidates to form a cluster, to indicate that the pixel is assigned to an existing cluster or to a new cluster.

17. A vehicle including the system of claim 16.

18. A computer program including instructions for executing the steps of a method according to any one of claims 1 to 14 when said program is executed by a computer.

19. A recording medium readable by a computer and having recorded thereon a computer program including instructions for executing the steps of a method according to any one of claims 1 to 15.

## Patentansprüche

1. Clustering-Verfahren, das auf einen Änderungsereignisstrom angewendet wird, der von einem ereignisbasierten Vision-Sensor erzeugt wird, der eine Vielzahl von Pixeln umfasst und konfiguriert ist, um einen Strom von Änderungsereignissen auszugeben, wobei ein Cluster einem Objekt entspricht, das von dem ereignisbasierten Vision-Sensor beobachtet wird, und wobei jedes Änderungsereignis einer von einem Pixel erfassten Helligkeitsänderung entspricht und einen Zeitstempel, eine Pixeladresse und einen Parameter, der ein Vorzeichen der Helligkeitsänderung beschreibt, umfasst, umfassend:
Bereitstellen (S00) einer Matrix, die die gleichen Abmessungen wie der ereignisbasierte Vision-Sensor aufweist, in der an jeder Position ein Indikator gespeichert ist, um anzugeben, ob das entsprechende Pixel des ereignisbasierten Sensors nicht verwendet oder einem gegebenen Cluster zugewiesen wurde oder zum Bilden eines Clusters verwendet werden kann, wobei das Pixel in diesem Fall als Kandidat bezeichnet wird, und
wenn ein Änderungsereignis (S01) in dem Änderungsereignisstrom an einem Pixel erkannt wird:
Bestimmen (S04) einer Gruppe von Pixeln, die auf dem Pixel zentriert sind,
Ablesen (S05) der Indikatoren der Pixel in der Gruppe von Pixeln, wobei die Anzahl an Pixeln, die Clustern zugewiesen sind, bestimmt wird und die Anzahl an Pixeln, die Kandidaten zum Bilden eines Clusters sind, auch bestimmt wird,
Verifizieren (S06), ob eine vorbestimmte Regel unter Verwendung der in Leseschritt gelesenen Indikatoren verifiziert wird,
wenn die vorbestimmte Regel, die zumindest auf den Indikatoren der Pixel der Gruppe von Pixeln basiert, verifiziert wird, Modifizieren (S07) des Indikators des Pixels abhängig von der Anzahl von Pixeln, die Clustern zugewiesen sind, und der Anzahl von Pixeln, die Kandidaten zum Bilden eines Clusters, um anzugeben, dass das Pixel einem bestehenden Cluster oder einem neuen Cluster zugewiesen ist.

2. Verfahren nach Anspruch 1, wobei die Gruppe von Pixeln als die Pixel definiert ist, die zu einer Sub-Matrix gehören, die auf dem Pixel zentriert ist.

3. Verfahren nach Anspruch 2, wobei die Sub-Matrix eine 5x5-Matrix oder eine 3x3-Matrix ist.

4. Verfahren nach Anspruch 2 oder 3, umfassend einen Schritt eines Bestimmens der Größe der Sub-Matrix.

5. Verfahren nach einem der Ansprüche 1 bis 4, wobei die vorbestimmte Regel verifiziert wird, wenn eine Anzahl von Pixeln oberhalb eines gegebenen Schwellenwerts in der Gruppe von Pixeln einen Indikator aufweist, der angibt, dass sie einem gleichen Cluster zugewiesen sind, und der Indikator des Pixels geändert wird, um anzugeben, dass das Pixel diesem Cluster zugewiesen ist.

6. Verfahren nach Anspruch 5, wobei eine andere vorbestimmte Regel verifiziert wird, wenn eine Anzahl von Pixeln über einem gegebenen Schwellenwert in der Gruppe von Pixeln einen Indikator aufweist, der angibt, dass sie Kandidaten zum Bilden eines Clusters sind, und der Indikator des Pixels geändert wird, um anzugeben, dass das Pixel einem neuen Cluster zugewiesen wird.

7. Verfahren nach Anspruch 5 oder 6, wobei die vorbestimmte Regel oder die andere vorbestimmte Regel nicht verifiziert wird, und die Matrix an jeder Position mindestens einen zusätzlichen Indikator umfasst, und wobei der Indikator des Pixels nur dann geändert wird, um anzugeben, dass das Pixel einem Cluster zugewiesen ist, wenn eine vorbestimmte zusätzliche Regel, die auf den zusätzlichen Indikatoren von Pixeln der Gruppe von Pixeln basiert, verifiziert wird.

8. Verfahren nach Anspruch 5, wobei der mindestens eine zusätzliche Indikator einen Bewegungsindikator umfasst, der eine Geschwindigkeit und eine Richtung angibt, in die sich der Cluster bewegt, der diesem Pixel zugewiesen ist.

9. Verfahren nach Anspruch 8, wobei die mindestens eine zusätzliche vorbestimmte Regel verifiziert wird, wenn eine Anzahl von Pixeln oberhalb eines gegebenen Schwellenwerts in der Gruppe von Pixeln einen Bewegungsindikator aufweist, der eine Richtung angibt, die auf das Pixel ausgerichtet ist, und wobei der Bewegungsindikator des Pixels gemäß dem Bewegungsindikator der diesem Cluster zugewiesenen Pixel geändert wird.

10. Verfahren nach Anspruch 8, wobei der Bewegungsindikator des Pixels bekannt ist, und wobei die mindestens eine zusätzliche vorbestimmte Regel verifiziert wird, wenn eine Anzahl von Pixeln über einem gegebenen Schwellenwert in der Gruppe von Pixeln einen Bewegungsindikator aufweist, der innerhalb eines gegebenen Abstands von dem Bewegungsindikator des Pixels ist.

11. Verfahren nach einem der Ansprüche 7 bis 10, wobei der mindestens eine zusätzliche Indikator einen Farbindikator umfasst.

12. Verfahren nach Anspruch 11, wobei der Farbindikator des Pixels bekannt ist, und wobei die mindestens eine zusätzliche vorbestimmte Regel verifiziert wird, wenn eine Anzahl von Pixeln oberhalb eines gegebenen Schwellenwerts in der Gruppe von Pixeln einen Farbindikator innerhalb eines Abstands von der Farbe des Farbindikators des Pixels aufweist.

13. Verfahren nach Anspruch 11 oder 12, wobei der Farbindikator des Pixels nicht bekannt ist und wobei der Farbindikator des Pixels mit einer Farbe geändert wird, die aus den Farbindikatoren der Pixel erlangt wird, die diesem Cluster zugewiesen sind.

14. Verfahren nach einem der Ansprüche 1 bis 13, umfassend ein Erstellen einer Liste von Clustern basierend auf der Matrix und den Pixeln, die den Clustern zugewiesen sind.

15. Verfahren nach Anspruch 14, wenn kombiniert mit einem der Ansprüche 7 bis 13, umfassend ein Zusammenführen von Clustern oder ein Aufteilen eines Clusters oder ein Entfernen eines Clusters basierend auf mindestens einem zusätzlichen Indikator der Pixel dieser Cluster.

16. System zum Clustern von Pixeln, wobei das System einen ereignisbasierten Vision-Sensor enthält, der eine Vielzahl von Pixeln umfasst und konfiguriert ist, um einen Strom von Änderungsereignissen auszugeben, wobei ein Cluster einem Objekt entspricht, das von dem ereignisbasierten Vision-Sensor beobachtet wird, und wobei jedes Änderungsereignis einer von einem Pixel erfassten Helligkeitsänderung entspricht und einen Zeitstempel, eine Pixeladresse und einen Parameter, der ein Vorzeichen der Helligkeitsänderung beschreibt, umfasst,
das System umfassend einen Prozessor (201), der zu Folgendem konfiguriert ist:
Bereitstellen einer Matrix, die die gleichen Abmessungen wie der ereignisbasierte Vision-Sensor aufweist, in der an jeder Position ein Indikator gespeichert ist, um anzugeben, ob das entsprechende Pixel des ereignisbasierten Sensors nicht verwendet oder einem gegebenen Cluster zugewiesen wurde oder zum Bilden eines Clusters verwendet werden kann, wobei das Pixel in diesem Fall als Kandidat bezeichnet wird, und
wenn ein Änderungsereignis in dem Änderungsereignisstrom an einem Pixel erkannt wird: Bestimmen einer Gruppe von Pixeln, die auf dem Pixel zentriert sind,
Ablesen der Indikatoren der Pixel in der Gruppe von Pixeln, wobei die Anzahl an Pixeln, die Clustern zugewiesen sind, bestimmt wird und die Anzahl an Pixeln, die Kandidaten zum Bilden eines Clusters sind, auch bestimmt wird,
Verifizieren, ob eine vorbestimmte Regel unter Verwendung der in Leseschritt gelesenen Indikatoren verifiziert wird,
wenn die vorbestimmte Regel, die zumindest auf den Indikatoren der Pixel der Gruppe von Pixeln basiert, verifiziert wird, Modifizieren des Indikators des Pixels abhängig von der Anzahl von Pixeln, die Clustern zugewiesen sind, und der Anzahl von Pixeln, die Kandidaten zum Bilden eines Clusters, um anzugeben, dass das Pixel einem bestehenden Cluster oder einem neuen Cluster zugewiesen ist.

17. Fahrzeug, das das System nach Anspruch 16 beinhaltet.

18. Computerprogramm, das Anweisungen zum Ausführen der Schritte eines Verfahrens nach einem der Ansprüche 1 bis 14 beinhaltet, wenn das Programm von einem Computer ausgeführt wird.

19. Aufzeichnungsmedium, das von einem Computer lesbar ist und auf dem ein Computerprogramm aufgezeichnet ist, das Anweisungen zum Ausführen der Schritte eines Verfahrens nach einem der Ansprüche 1 bis 15 beinhaltet.

## Revendications

1. Procédé de regroupement appliqué à un flux d'événement de changement produit par un capteur de vision basé sur un événement qui comprend une pluralité de pixels et est configuré pour délivrer un flux d'événements de changement, selon lequel un groupe correspond à un objet observé par le capteur de vision basé sur un événement, et selon lequel chaque événement de changement correspond à un changement de luminosité détecté par un pixel et comprend un horodatage, une adresse de pixel, et un paramètre décrivant un signe dudit changement de luminosité, comprenant :
la fourniture (S00) d'une matrice ayant les mêmes dimensions que le capteur de vision basé sur un événement dans laquelle, à chaque position, un indicateur est stocké pour indiquer si le pixel correspondant du capteur basé sur un événement n'était pas utilisé ou assigné à un groupe donné ou peut être utilisé pour former un groupe, auquel cas le pixel est appelé un candidat, et
quand un événement de changement est détecté (S01) dans le flux d'événement de changement au niveau d'un pixel :
la détermination (S04) d'un groupe de pixels centré sur le pixel,
la lecture (S05) des indicateurs des pixels dans le groupe de pixels où le nombre de pixels assignés aux groupes est déterminé et le nombre de pixels qui sont des candidats pour former un groupe est également déterminé,
la vérification (S06) du fait qu'une règle prédéterminée est vérifiée en utilisant les indicateurs lus dans l'étape de lecture,
si la règle prédéterminée basée sur au moins les indicateurs des pixels du groupe de pixels est vérifiée, la modification (S07) de l'indicateur du pixel, comme une fonction du nombre de pixels assignés aux groupes et du nombre de pixels qui sont des candidats pour former un groupe, pour indiquer que le pixel est assigné à un groupe existant ou à un nouveau groupe.

2. Procédé selon la revendication 1, selon lequel le groupe de pixels est défini comme les pixels appartenant à une sous-matrice centrée sur le pixel.

3. Procédé selon la revendication 2, selon lequel la sous-matrice est une matrice 5x5 ou une matrice 3x3.

4. Procédé selon la revendication 2 ou 3, comprenant une étape de détermination de la taille de la sous-matrice.

5. Procédé selon l'une quelconque des revendications 1 à 4, selon lequel la règle prédéterminée est vérifiée si un nombre de pixels au-dessus d'un seuil donné dans le groupe de pixels a un indicateur indiquant qu'ils sont assignés à un même groupe, et l'indicateur du pixel est changé pour indiquer que le pixel est assigné à ce groupe.

6. Procédé selon la revendication 5, selon lequel une autre règle prédéterminée est vérifiée si un nombre de pixels au-dessus d'un seuil donné dans le groupe de pixels a un indicateur indiquant qu'ils sont des candidats pour former un groupe, et l'indicateur du pixel est changé pour indiquer que le pixel est assigné à un nouveau groupe.

7. Procédé selon la revendication 5 ou 6, selon lequel la règle prédéterminée ou l'autre règle prédéterminée n'est pas vérifiée, et la matrice comprend à chaque position au moins un indicateur supplémentaire, et selon lequel l'indicateur du pixel est seulement modifié pour indiquer que le pixel est assigné à un groupe si une règle supplémentaire prédéterminée basée sur les indicateurs supplémentaires de pixels du groupe de pixels est vérifiée.

8. Procédé selon la revendication 5, selon lequel le au moins un indicateur supplémentaire comprend un indicateur de mouvement indiquant une vitesse et une direction dans laquelle le groupe assigné à ce pixel se déplace.

9. Procédé selon la revendication 8, selon lequel la au moins une règle prédéterminée supplémentaire est vérifiée si un nombre de pixels au-dessus d'un seuil donné dans le groupe de pixels a un indicateur de mouvement indiquant une direction orientée vers le pixel, et selon lequel l'indicateur de mouvement du pixel est changé en fonction de l'indicateur de mouvement des éléments d'image assignés à ce groupe.

10. Procédé selon la revendication 8, selon lequel l'indicateur de mouvement du pixel est connu, et selon lequel la au moins une règle prédéterminée supplémentaire est vérifiée si un nombre de pixels au-dessus d'un seuil donné dans le groupe de pixels a un indicateur de mouvement qui est à une distance donnée de l'indicateur de mouvement du pixel.

11. Procédé selon l'une quelconque des revendications 7 à 10, selon lequel le au moins un indicateur supplémentaire comprend un indicateur de couleur.

12. Procédé selon la revendication 11, selon lequel l'indicateur de couleur du pixel est connu et selon lequel la au moins une règle prédéterminée supplémentaire est vérifiée si un nombre de pixels au-dessus d'un seuil donné dans le groupe de pixels a un indicateur de couleur à une distance de la couleur de l'indicateur de couleur du pixel.

13. Procédé selon la revendication 11 ou 12, selon lequel l'indicateur de couleur du pixel n'est pas connu et selon lequel l'indicateur de couleur du pixel est changé avec une couleur obtenue à partir des indicateurs de couleur des pixels assignés à ce groupe.

14. Procédé selon l'une quelconque des revendications 1 à 13, comprenant l'élaboration d'une liste de groupes sur la base de la matrice et des pixels qui sont assignés aux groupes.

15. Procédé selon la revendication 14 lorsqu'elle est combinée avec l'une quelconque des revendications 7 à 13, comprenant la fusion de groupes ou la division d'un groupe, ou le retrait d'un groupe sur la base de au moins un indicateur supplémentaire des pixels de ces groupes.

16. Système pour le regroupement de pixels, le système comprenant un capteur de vision basé sur un événement qui comprend une pluralité de pixels et est configuré pour délivrer un flux d'événements de changement, dans lequel un groupe correspond à un objet observé par le capteur de vision basé sur un événement, et dans lequel chaque événement de changement correspond à un changement de luminosité détecté par un pixel et comprend un horodatage, une adresse de pixel, et un paramètre décrivant un signe dudit changement de luminosité,
le système comprenant un processeur (201) configuré pour :
fournir une matrice ayant les mêmes dimensions que le capteur de vision basé sur un événement dans lequel, à chaque position, un indicateur est stocké pour indiquer si le pixel correspondant du capteur basé sur un événement n'était pas utilisé ou assigné à un groupe donné ou peut être utilisé pour former un groupe, auquel cas le pixel est appelé un candidat, et
quand un événement de changement est détecté dans le flux d'événement de changement au niveau d'un pixel :
déterminer un groupe de pixels centré sur le pixel,
lire les indicateurs des éléments d'image dans le groupe de pixels où le nombre de pixels assignés aux groupes est déterminé et le nombre de pixels qui sont des candidats pour former un groupe est également déterminé,
vérifier si une règle prédéterminée est vérifiée en utilisant les indicateurs lus dans l'étape de lecture,
si la règle prédéterminée basée sur au moins les indicateurs des pixels du groupe de pixels est vérifiée, modifier l'indicateur du pixel, en fonction du nombre de pixels assignés aux groupes et du nombre de pixels qui sont des candidats pour former un groupe, pour indiquer que le pixel est assigné à un groupe existant ou à un nouveau groupe.

17. Véhicule comprenant le système selon la revendication 16.

18. Programme informatique comprenant des instructions pour exécuter les étapes d'un procédé selon l'une quelconque des revendications 1 à 14 quand ledit programme est exécuté par un ordinateur.

19. Support d'enregistrement lisible par un ordinateur et ayant enregistré dessus un programme informatique comprenant des instructions pour exécuter les étapes d'un procédé selon l'une quelconque des revendications 1 à 15.
